# EUROPEAN PATENT SPECIFICATION

(11) **EP 4 025 056 B1**
(45) Date of publication and mention of the grant of the patent: **20.08.2025**
(21) Application number: 20764682.9
(22) Date of filing: 04.09.2020
(51) Int. Cl.: A21D 8/02, C01F 11/18, C08K 3/26, A21D 10/00

(54) **BAKING POWDER**
BACKPULVER
POUDRE DE CUISSON

(30) Priority: 06.09.2019 EP 19196035
(43) Date of publication of application: 13.07.2022
(73) Proprietor: Omya International AG, 4665 Oftringen (CH)
(72) Inventor: SHARMA, Lalit, 4800 Zofingen (CH); BUDDE, Tanja, 4805 Brittnau (CH); RÜEGG, Ramona, 8804 Au (CH)
(74) Representative: Maiwald GmbH
(86) International application number: PCT/EP2020/074813
(87) International publication number: WO 2021/044011

(56) References cited:
- CN-A- 102 132 713
- US-A- 4 966 782
- US-A- 5 260 082
- ANONYMOUS: "You Have the (Baking) Power with Low-Sodium Baking Powders - Aging & Disability Services for Seattle & King County", 14 December 2018 (2018-12-14), pages 1 - 8, XP055661588, Retrieved from the Internet <URL:https://www.agingkingcounty.org/2018/12/14/you-have-the-baking-power-with-low-sodium-baking-powders/> [retrieved on 20200124]
- CHRISTY: "The Daily Dish Low Sodium Recipes & MORE. Skip to content ? Home ? Links & FAQs ? My Story ? Quick Fixes ? Recipe Index <- Strawberry Shortcake Cast your vote for The Daily Dish! ->", 28 February 2011 (2011-02-28), pages 1 - 14, XP055661581, Retrieved from the Internet <URL:http://thedailydish.us/from-the-kitchen/baking-without-salt/> [retrieved on 20200124]

## Description

The present invention refers to a baking powder, a product comprising the baking powder, a process for producing a baking powder, and to the use of a composition comprising a natural ground calcium carbonate and a solid organic acid as a baking powder.

A sodium-rich diet may lead to physical conditions such as high blood pressure. It is believed that persons with high blood pressure a more likely to develop heart disease or have a stroke. In principle, sodium may be taken up into the body with any type of food. Often, the sodium in our diets comes from adding sodium when food is being prepared. Especially pre-packaged food, processed food and prepared foods tend to be high in sodium. The sodium-containing compounds in such food products are, for example, salt, mono sodium glutamate, baking soda or baking powder or disodium phosphate.

Furthermore, there is concern that a phosphate-rich diet may lead to a higher risk of cardiovascular disease and a higher risk of heart attacks. It has further been suggested that high intake of phosphate can have a negative impact on bone health and may increase the risk for people with chronic kidney disorder of developing a disease. Phosphate-containing additives can be found in all types of packaged food or prepared food. Often phosphates are being added to food products in the form of sodium phosphate salts.

One food product, which usually contains high amounts of sodium and/or phosphate ions is baking powder. Baking powders are leavening agents, which are used to increase the volume of baked and/or cooked food. Most commercially available baking powders are based on a basic carbon dioxide source, often a carbonate, and an acidic component. Upon mixing the baking powder with other food ingredients in the presence of water and/or by heating the baking powder, the basic carbon dioxide source and the acidic component react and carbon dioxide is released. Common baking powders usually contain sodium bicarbonate as a carbon dioxide source and sodium pyrophosphate as an acidic component. Furthermore, separating agents such as dried starch are usually included into commercially available baking powders.

An internet newsletter by the Aging & Disability Services for Seattle & King County entitled "You Have the (Baking) Power with Low-Sodium Baking Powders*"* describes reduced sodium baking powders. US4966782 A describes leavening systems, doughs and baked goods which employ stabilized x-ray amorphous calcium carbonate as the carbonate factor in combination with suitable leavening acids. Also described in US4966782 A are sodium-free leavening systems.

In view of the health concerns associated with a high uptake of sodium and/or phosphate, there is a demand for a baking powder, which is free of sodium-containing and/or phosphate-containing components. Furthermore, it is desired that the sodium-free and/or phosphate-free baking powder performs at least comparable to commercial baking powders when used for baking or cooking food. It is further desirable that the baking powder does not need to contain a separating agent. It is also desirable that the baking powder can be prepared by as few as possible components, which are readily accessible in large amounts.

Accordingly, it is one object of the present invention to provide a baking powder, which is free of sodium-containing and/or phosphate-containing components. It is another object that the baking powder performs at least comparable to, or better than, known baking powders, which contain sodium and/or phosphate components. Another object of the present invention is to provide a baking powder, which does not contain a separating agent. Yet another object of the present invention is to provide a baking powder, which is based on as few as possible components. Another object of the present invention is to provide a baking powder, which is based on a single carbon dioxide source and/or a single acidic component.

One or more of the foregoing objects is achieved by the subject-matter according to the appended independent claims.

According to one aspect of the present invention, a baking powder is provided, comprising a natural ground calcium carbonate having a volume median particle size d₅₀ from 1 to 15 µm, and at least one solid organic acid having a pKa value in the range of 2.5 to 7.0, wherein the at least one solid organic acid is citric acid, wherein the natural ground calcium carbonate is present in an amount of from 30 to 70 wt.%, based on the total weight of the baking powder, and the at least one solid organic acid is present in an amount of from 30 to 70 wt.%, based on the total weight of the baking powder, wherein the baking powder is sodium-free and free of magnesium carbonate which means that the baking powder contains less than 1 wt.% of a sodium-containing component and less than 1 wt.% of magnesium carbonate.

The inventors have surprisingly found that the sodium-free baking powder defined herein performs comparable to prior art baking powders without the need for a sodium-containing carbon dioxide source such as sodium bicarbonate or a sodium-containing acidic component such as disodium hydrogen phosphate or sodium dihydrogen phosphate.

According to one aspect of the present invention, a product is provided, comprising the baking powder according to the present invention, wherein the product is preferably a baking mixture, more preferably a baking mixture for a pastry, a bread, a cake, a waffle, a pizza or a noodle.

According to another aspect of the present invention, a process for producing a baking powder according to the claimed invention is provided, comprising the steps of (a) providing a natural ground calcium carbonate having a volume median particle size d₅₀ from 1 to 15 µm in dry form, (b) providing a solid organic acid having a pKa value in the range of 2.5 to 7.0, (c) mixing the natural ground calcium carbonate of step (a) with the solid organic acid of step (b) in a dry blending step to obtain a baking powder.

Yet another aspect of the present invention is directed to the use of a composition as a baking powder, wherein the composition comprises a natural ground calcium carbonate having a volume median particle size *d*₅₀ from 1 to 15 µm, and a solid organic acid having a pKa value in the range of 2.5 to 7.0, wherein the at least one solid organic acid is citric acid, wherein the natural ground calcium carbonate is present in an amount of from 30 to 70 wt.%, based on the total weight of the baking powder, and the at least one solid organic acid is present in an amount of from 30 to 70 wt.%, based on the total weight of the baking powder, wherein the composition is sodium-free and free of magnesium carbonate which means that the baking powder contains less than 1 wt.% of a sodium-containing component and less than 1 wt.% of magnesium carbonate.

Advantageous embodiments of the present invention are defined in the dependent claims.

According to one embodiment of the present invention, the natural ground calcium carbonate is selected from the group consisting of marble, chalk, limestone, and mixtures thereof.

According to one embodiment of the present invention, the natural ground calcium carbonate has a volume median particle size *d*₅₀ from 1.5 to 10 µm, preferably from 1.5 to 8 µm, and most preferably from 2 to 6 µm, and/or wherein the natural ground calcium carbonate has a volume top cut particle size d₉₈ from 2 to 30 µm, preferably from 3 to 20 µm, more preferably from 3 to 15 µm and most preferably from 4 to 12 µm.

According to one embodiment of the present invention, the baking powder contains less than 10 wt.%, preferably less than 5 wt.%, more preferably less than 1 wt.% of a phosphate salt, and most preferably is phosphate-free.

According to one embodiment of the present invention, the natural ground calcium carbonate is present in an amount of from 40 to 60 wt.%, based on the total weight of the baking powder, and/or wherein the at least one solid organic acid is present in an amount of from 40 to 60 wt.%, based on the total weight of the baking powder.

According to one embodiment of the present invention, the molar ratio of the natural ground calcium carbonate to the carboxylic acid group(s) of the at least one solid organic acid ranges between 0.25:1 to 1.5:1, preferably from 0.4:1 to 1.2:1, more preferably from 0.6:1 to 1:1, and most preferably from 0.7:1 to 0.9:1.

According to one embodiment of the present invention, the baking powder contains less than 10 wt.%, preferably less than 5 wt.%, more preferably less than 1 wt.%, of a separating agent, based on the total weight of the baking powder, and most preferably is free of a separating agent.

According to one embodiment of the present invention, the at least one solid organic acid is a mixture of at least one organic acid, and a salt thereof, and more preferably having a weight ratio of the at least one organic acid to the salt thereof in the range between 0.25:1 to 3:1, preferably between 0.75:1 to 2.5:1, and more preferably between 1:1 to 2:1.

According to one embodiment of the present invention, the baking powder consists of the natural ground calcium carbonate and the at least one solid organic acid.

It should be understood that for the purposes of the present invention, the following terms have the following meanings:
"Natural ground calcium carbonate" (GCC) in the meaning of the present invention is a calcium carbonate obtained from natural sources, such as limestone, marble, or chalk, and processed through a wet and/or dry treatment such as grinding, screening and/or fractionating, for example, by a cyclone or classifier.

A "baking powder" in the meaning of the present invention refers to the composition, which is suitable for being used as a leavening agent in the preparation of food, i.e. an agent or a composition which releases carbon dioxide during the preparation of food for lightening and/or softening the food.

The term "organic acid" in the meaning of the present invention refers to a chemical compound, which includes at least one carboxylic acid group (-COOH). The term "organic acid" in the meaning of the present invention also encompasses a mixture of an organic acid and a salt thereof, and a mixture of an organic acid and a hydrate thereof. For example, the solid organic acid may be a mixture of lactic acid and lactate or citric acid and a citrate and/or a citric acid hydrate. The term "solid" organic acid in the meaning of the present invention refers to an organic acid, which is present in form of a solid at a temperature of 23°C and a pressure of 1.013 Bar.

The "pKa value" refers to the negative decadic logarithm of the acid dissociation constant; pKa = - log₁₀(Kₐ), wherein Kₐ is the acid dissociation constant. The skilled person knows the pKa value of an acid, can look it up or determine it by suitable measures such as titration.

The "particle size" of particulate materials is described by its distribution of particle sizes *dₓ*. Unless indicated otherwise, the "particle size" is described as volume-based particle size distribution. This is indicated, for example, by "volume based median particle size", "volume median particle size" or "volume top cut particle size". Volume median particle size d₅₀ was evaluated using a Malvern Mastersizer 2000 or 3000 Laser Diffraction System. The *d*₅₀ or *d*₉₈ value, measured using a Malvern Mastersizer 2000 or 3000 Laser Diffraction System, preferably a Malvern Mastersizer 3000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005. The measurements were carried out in an aqueous solution of 0.1 wt.-% Na₄P₂O₇.

For certain materials specified herein, the value *dₓ* represents the diameter relative to which x % by weight of the particles have diameters less than *dₓ*. This means that, for example, the *d*₂₀ value is the particle size at which 20 wt.-% of all particles are smaller than that particle size. The *d*₅₀ value is thus the weight median particle size, i.e. 50 wt.-% of all particles are smaller than this particle size. For the purpose of the present invention, the particle size is specified as weight median particle size d₅₀(wt.) unless indicated otherwise. Particle sizes were determined by using a Sedigraph^{™} 5100 instrument or Sedigraph^{™} 5120 instrument of Micromeritics Instrument Corporation. The method and the instrument are known to the skilled person and are commonly used to determine the particle size of fillers and pigments. The measurements were carried out in an aqueous solution of 0.1 wt.-% Na₄P₂O₇.

When it is defined in the present application that the baking powder is "free" of a particular component, this means that such particular component has not been intentionally added to the baking powder. The baking powder is "free" of a particular component, if the baking powder contains less than 1 wt.%, preferably less than 0.5 wt.%, more preferably less than 0.2 wt.%, even more preferably less than 0.01 wt.%, and most preferably is essentially free of the particular component. For example, the term "sodium-free" in the meaning of the present invention means that no sodium component has been intentionally added to the baking powder. For example, a baking powder is "sodium-free", if it contains less than 1 wt.%, preferably less than 0.5 wt.%, more preferably less than 0.2 wt.%, even more preferably less than 0.01 wt.%, and most preferably is essentially free of sodium-containing component. For example, the term "phosphate-free" in the meaning of the present invention means that no phosphate component has been intentionally added to the baking powder. For example, a baking powder is "phosphate-free", if it contains less than 1 wt.%, preferably less than 0.5 wt.%, more preferably less than 0.2 wt.%, even more preferably less than 0.01 wt.%, and most preferably is essentially free of phosphate-containing component.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the terms "essentially consisting of" and "consisting of" are considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

In the following preferred embodiments of the inventive composition will be set out in more detail.

### The baking powder

The baking powder according to the present invention comprises a natural ground calcium carbonate having a volume median particle size d₅₀ from 1 to 15 µm.

According to one embodiment, the natural ground calcium carbonate is present in dry form, i.e. the natural ground calcium carbonate contains a residual moisture content of below 3.0 wt.%, preferably of below 2.0 wt.%, and more preferably of below 1.0 wt.%, based on the total dry weight of the natural ground calcium carbonate.

It is appreciated that the natural ground calcium carbonate can be one specific natural ground calcium carbonate or a mixture of different kinds of natural ground calcium carbonate(s).

In one embodiment of the present invention, the natural ground calcium carbonate comprises, preferably consists of, one type of natural ground calcium carbonate. Alternatively, the natural ground calcium carbonate comprises, preferably consists of, two or more types of natural ground calcium carbonates. For example, the natural ground calcium carbonate comprises, preferably consists of, two or three types of natural ground calcium carbonates. Preferably, the natural ground calcium carbonate comprises, more preferably consists of, one type of natural ground calcium carbonate.

In a preferred embodiment of the present invention, the natural ground calcium carbonate is selected from the group consisting of chalk, limestone or marble. More preferably, the natural ground calcium carbonate is limestone or marble, and most preferably marble.

A natural ground calcium carbonate may be obtained, for example, in a wet and/or dry comminution step, such as crushing and/or grinding, from natural calcium carbonate-containing minerals (e.g. chalk, limestone, marble or dolomite). According to one embodiment, the natural ground calcium carbonate is a natural wet-ground calcium carbonate. In another embodiment, the natural ground calcium carbonate is a natural dry-ground calcium carbonate.

The grinding step can be carried out with any conventional grinding device, for example, under conditions such that refinement predominantly results from impacts with a secondary body, i.e. in one or more of a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. The grinding step may also be performed under conditions such that autogenous grinding takes place and/or by horizontal ball milling, and/or other such processes known to the skilled man.

In one embodiment, grinding is carried out in a vertical or horizontal ball mill, preferably in a vertical ball mill. Such vertical and horizontal ball mills usually consist of a vertically or horizontally arranged, cylindrical grinding chamber comprising an axially fast rotating agitator shaft being equipped with a plurality of paddles and/or stirring discs, such as described for example in EP0607840 A1.

It is to be noted that grinding of the calcium carbonate mineral may be carried out by using at least one of the aforementioned grinding methods or devices. However, it is also possible to use a combination of any of the foregoing methods or a series of any of the aforementioned grinding devices.

Subsequent to the grinding step, the ground calcium carbonate mineral may, optionally, be divided into two or more fractions, each having different particle distributions, by use of a classifying step. A classifying step in general serves to divide a feed fraction having a certain particle size distribution into a coarse fraction, which may be subjected to another grinding cycle, and a fine fraction, which may be used as the final product. For this purpose, screening devices as well as gravity-based devices, such as centrifuges or cyclones (e.g. hydrocyclones) and any combination of the aforementioned devices may be used.

According to one embodiment of the present invention, the natural ground calcium carbonate has a volume median particle size d₅₀ from 1.5 to 10 µm, preferably from 1.5 to 8 µm, and most preferably from 2 to 6 µm, and/or the natural ground calcium carbonate has a volume top cut particle size *d*₉₈ from 2 to 30 µm, preferably from 3 to 20 µm, more preferably from 3 to 15 µm and most preferably from 4 to 12 µm.

According to one embodiment of the present invention, the natural ground calcium carbonate has a volume median particle size *d*₅₀ from 1.5 to 10 µm, preferably from 1.5 to 8 µm, and most preferably from 2 to 6 µm, and a volume top cut particle size *d*₉₈ from 2 to 30 µm, preferably from 3 to 20 µm, more preferably from 3 to 15 µm and most preferably from 4 to 12 µm.

According to one embodiment of the present invention, the natural ground calcium carbonate has a volume median particle size *d*₅₀ from 1.5 to 10 µm, preferably from 1.5 to 8 µm, and most preferably from 2 to 6 µm, and a volume top cut particle size *d*₉₈ from 2 to 30 µm, preferably from 3 to 20 µm, more preferably from 3 to 15 µm and most preferably from 4 to 12 µm.

According to one preferred embodiment of the present invention, the natural ground calcium carbonate has a volume median particle size d₅₀ from 1.5 to 6 µm, and a volume top cut particle size d₉₈ from 4 to 12 µm.

The inventors surprisingly found that a natural ground calcium carbonate having a defined particle size distribution as defined in the foregoing paragraphs is particularly useful as a carbon dioxide source in the baking powder, compared to a natural ground calcium carbonate not having such a defined particle size distribution such as a coarse calcium carbonate.

The baking powder according to the present invention further comprises at least one solid organic acid having a pKa value in the range of 2.5 to 7.0. The at least one solid organic acid is citric acid.

The at least one solid organic acid having a pKa value in the range of 2.5 to 7.0 may be a solid organic acid, which is approved for use as a food additive, for example, by the European Food Safety Authority. A list of approved solid organic acids, for example, is available in the latest consolidated version of Annex II of the Regulation (EC) No 1333/2008 of the European Parliament and of the Council of 16 December 2008 on food additives. According to one embodiment, the solid organic acid is suitable for use as a food additive. According to one embodiment, the solid organic acid is approved by the European Food Safety Authority for use as a food additive.

The at least one solid organic acid may be a solid organic acid or a mixture of a solid organic acid and a salt thereof. According to one embodiment, the at least one solid organic acid is present in fully protonated form, i.e. essentially all carboxylic acid groups of the solid organic acid are present in the form of -COOH. According to another embodiment, the at least one solid organic acid is a mixture of a solid organic acid and a salt thereof. For example, the at least one solid organic acid may be a mixture of the at least one organic acid and a salt thereof.

In case the at least one solid organic acid is a mixture of the at least one organic acid and the salt thereof, the mixture may have specific weight ratios with respect to the at least one organic acid and the salt thereof. According to one embodiment, the mixture has a weight ratio of the at least one organic acid to the salt thereof in the range between 0.25:1 to 3:1, preferably between 0.75:1 to 2.5:1, and more preferably between 1:1 to 2:1.

The at least one solid organic acid is a tri-carboxylic acid which is citric acid.

The baking powder according to the present invention is sodium-free, i.e., the baking powder contains less than 1 wt.% of a sodium-containing component.

Furthermore, the baking powder according to the present invention may also be free, or at least may contain a reduced amount compared to known baking powders, of other components, which may be considered a health risk when consumed in excess.

According to one embodiment of the present invention, the baking powder according to any one of the preceding claims, wherein the baking powder contains less than 10 wt.%, preferably less than 5 wt.%, more preferably less than 1 wt.% of a phosphate salt, and most preferably is phosphate-free.

In principle, the baking powder may contain further additives such as an inorganic acid, a preservative and/or a separating agent. A "separating agent" in the meaning of the present invention is an agent, which moderates or suppresses the reaction between a carbon dioxide source and an acidic component of a baking powder and/or which ad-/absorbed moisture being in contact with a baking powder.

In one embodiment, the baking powder contains an additive, preferably an inorganic acid, a preservative and/or a separating agent, in an amount of in the range from 10 to 50 wt.%, preferably 20 to 40 wt.%, based on the total weight of the baking powder.

In one embodiment, the baking powder contains an additive, preferably an inorganic acid, a preservative and/or a separating agent, in an amount of in the range from 0.1 to 20 wt.%, preferably 1 to 10 wt.%, based on the total weight of the baking powder.

According to one embodiment, the baking powder contains a separating agent. Suitable separating agents are, for example, rice starch or corn starch.

In one embodiment, the baking powder contains an inorganic acid such as calcium hydrogen phosphate. An "inorganic acid" in the meaning of the present invention is an acid, which does not contain a carbon-hydrogen bond.

However, it has surprisingly been found by the inventors that the inventive baking powder does not need to contain a separating agent for providing a good performance. For example, a separating agent and/or an inorganic acid can be avoided for the inventive baking powder, which reduces the raw materials required for preparing the inventive baking powder.

According to one embodiment, the baking powder contains less than 10 wt.%, preferably less than 5 wt.%, more preferably less than 1 wt.%, even more preferably less than 0.01 wt.%, of a separating agent, based on the total weight of the baking powder, and most preferably is essentially free of a separating agent.

It has further been found by the inventors that the combination of a natural ground calcium carbonate as described herein and at least one solid organic acid having a pKa value in the range of 2.5 to 7.0 is sufficient for providing a baking powder, which shows a good performance or a performance comparable to baking powders known in the prior art.

The inventive baking powder does not contain sodium bicarbonate as carbon dioxide source. Furthermore, the baking powder also does not need to contain further carbonates or carbon dioxide sources other than the calcium carbonate for providing an appreciable performance.

The baking powder is free of magnesium carbonate, the baking powder contains less than 1 wt.% of magnesium carbonate. According to another preferred embodiment, the baking powder is free of further carbon dioxide sources. A "carbon dioxide source" in the meaning of the present invention is a substance, which may releases carbon dioxide upon reaction with another substance, preferably an acid.

According to another particularly preferred embodiment, the baking powder essentially consists of a natural ground calcium carbonate as defined herein and citric acid. According to another particularly preferred embodiment, the baking powder consists of a natural ground calcium carbonate as defined herein and citric acid.

According to another particularly preferred embodiment, the baking powder essentially consists of a natural ground calcium carbonate having a volume median particle size d₅₀ from 1 to 15 µm, and preferably from 1.5 to 8 µm, and a volume top cut particle size d₉₈ from 2 to 30 µm, preferably from 3 to 15 µm, and most preferably from 4 to 12 µm, and citric acid. According to another particularly preferred embodiment, the baking powder consists of a natural ground calcium carbonate having a volume median particle size d₅₀ from 1 to 15 µm, and preferably from 1.5 to 8 µm, and a volume top cut particle size d₉₈ from 2 to 30 µm, preferably from 3 to 15 µm, and most preferably from 4 to 12 µm, and citric acid.

According to another particularly preferred embodiment, the baking powder essentially consists of a natural ground calcium carbonate having a volume median particle size d₅₀ from 1 to 15 µm, and preferably from 1.5 to 8 µm, and a volume top cut particle size d₉₈ from 2 to 30 µm, preferably from 3 to 15 µm, and most preferably from 4 to 12 µm, and citric acid, wherein the natural ground calcium carbonate is present in an amount of from 30 to 70 wt.%, and preferably from 40 to 60 wt.%, based on the total weight of the baking powder, and the citric acid is present in an amount of from 30 to 70 wt.%, and preferably from 40 to 60 wt.%, based on the total weight of the baking powder. According to another particularly preferred embodiment, the baking powder consists of a natural ground calcium carbonate having a volume median particle size d₅₀ from 1 to 15 µm, and preferably from 1.5 to 8 µm, and a volume top cut particle size d₉₈ from 2 to 30 µm, preferably from 3 to 15 µm, and most preferably from 4 to 12 µm, and citric acid, wherein the natural ground calcium carbonate is present in an amount of from 30 to 70 wt.%, and preferably from 40 to 60 wt.%, based on the total weight of the baking powder, and the citric acid is present in an amount of from 30 to 70 wt.%, and preferably from 40 to 60 wt.%, based on the total weight of the baking powder.

The inventive baking powder may comprise the natural ground calcium carbonate as defined herein and the at least one solid organic acid as defined herein in specific amounts with respect to each other.

According to another embodiment, the molar ratio of the natural ground calcium carbonate to the carboxylic acid group(s) of the at least one solid organic acid ranges between 0.25:1 to 1.5:1, preferably from 0.4:1 to 1.2:1, more preferably from 0.6:1 to 1:1, and most preferably from 0.7:1 to 0.9:1. The skilled person understands that 1 mol of the at least one solid organic acid may correspond to 1 mol, 2 mol or 3 mol of carboxylic acid groups, depending on the number of carboxylic acid groups being present in the organic acid. For example, 1 mol of citric acid corresponds to 3 mol of carboxylic acid groups. The skilled person knows the number of carboxylic acid groups of an organic acid, and, therefore, can calculate the molar ratio of the natural ground calcium carbonate to the carboxylic acid groups are the at least one solid organic acid.

The inventive baking powder comprises the natural ground calcium carbonate as defined herein and the at least one solid organic acid as defined herein in specific total amounts. The natural ground calcium carbonate is present in an amount of from 30 to 70 wt.%, and preferably from 40 to 60 wt.%, based on the total weight of the baking powder, and the at least one solid organic acid is present in an amount of from 30 to 70 wt.%, and preferably from 40 to 60 wt.%, based on the total weight of the baking powder.

According to a preferred embodiment, the baking powder comprises a natural ground calcium carbonate having a volume median particle size d₅₀ from 1.5 to 8 µm, and a volume top cut particle size d₉₈ from 3 to 15 µm and most preferably from 4 to 12 µm, at least one solid organic acid having a pKa value in the range of 2.5 to 7.0, wherein the at least one solid organic acid is citric acid, and wherein the baking powder is sodium-free and phosphate-free.

According to a preferred embodiment, the baking powder comprises a natural ground calcium carbonate having a volume median particle size d₅₀ from 1.5 to 8 µm, and a volume top cut particle size *d*₉₈ from 3 to 15 µm and most preferably from 4 to 12 µm, at least one solid organic acid having a pKa value in the range of 2.5 to 7.0, wherein the at least one solid organic acid is citric acid, wherein the natural ground calcium carbonate is present in an amount of from 30 to 70 wt.%, preferably from 40 to 60 wt.%, and the at least one solid organic acid is present in an amount of from 30 to 70 wt.%, preferably from 40 to 60 wt.%, based on the total weight of the natural ground calcium carbonate and the at least one solid organic acid, and wherein the baking powder is sodium-free and phosphate-free.

According to a preferred embodiment, the baking powder comprises a natural ground calcium carbonate having a volume median particle size d₅₀ from 1.5 to 8 µm, and a volume top cut particle size d₉₈ from 3 to 15 µm and most preferably from 4 to 12 µm, at least one solid organic acid having a pKa value in the range of 2.5 to 7.0, wherein the at least one solid organic acid is citric acid, wherein the natural ground calcium carbonate is present in an amount of from 30 to 70 wt.%, preferably from 40 to 60 wt.%, and the at least one solid organic acid is present in an amount of from 30 to 70 wt.%, preferably from 40 to 60 wt.%, based on the total weight of the natural ground calcium carbonate and the at least one solid organic acid, and wherein the baking powder is sodium-free, phosphate-free and free of a carbonate other than calcium carbonate.

According to a preferred embodiment, the baking powder consists of a natural ground calcium carbonate having a volume median particle size d₅₀ from 1.5 to 8 µm, and a volume top cut particle size d₉₈ from 3 to 15 µm and most preferably from 4 to 12 µm, and the at least one solid organic acid having a pKa value in the range of 2.5 to 7.0.

Another aspect of the present invention refers to a product comprising the baking powder according to the present invention. The product may be any product, in which a baking powder may be present. For example, such a product is typically a baking and/or cooking mixture. According to preferred embodiment, the product is a baking mixture, more preferably a baking mixture for a pastry, a bread, a cake, a waffle, a pizza or a noodle. According to one embodiment, the product is a pre-prepared food product, preferably a dough.

### The process of preparing the baking powder

According to another aspect of the present invention, a process for producing a baking powder according to the claimed invention is provided, comprising the steps of (a) providing a natural ground calcium carbonate having a volume median particle size d₅₀ from 1 to 15 µm in dry form, (b) providing a solid organic acid having a pKa value in the range of 2.5 to 7.0, (c) mixing the natural ground calcium carbonate of step (a) with the solid organic acid of step (b) in a dry blending step to obtain a baking powder.

A natural ground calcium carbonate in "dry form" in the meaning of the present invention refers to a natural ground calcium carbonate, which contains a residual moisture content of below 3.0 wt.%, preferably of below 2.0 wt.%, and more preferably of below 1.0 wt.%, based on the total dry weight of the natural ground calcium carbonate. A suitable method for determining the water content of the dry cosmetic and/or skin care composition will be selected by the skilled person. For example, the water content may be determined according to the Coulometric Karl Fischer measurement method, wherein the composition is heated to 220 °C, and the water content released as vapour and isolated using a stream of nitrogen gas (at 100 ml/min) is determined in a Coulometric Karl Fischer unit.

Mixing step c) is a dry blending step. A "dry blending" step in the meaning of the present invention is a mixing step of components in dry form in the absence of a liquid component. The dry blending step may be carried out with any known mixer for blending two or more dry components. The skilled person will select the appropriate mixer according to his equipment.

According to one particularly preferred embodiment, a process for producing a baking powder is provided, consisting of the steps of (a) providing a natural ground calcium carbonate having a volume median particle size *d*₅₀ from 1 to 15 µm in dry form, (b) providing citric acid, (c) mixing the natural ground calcium carbonate of step (a) with the citric acid of step (b) in a dry blending step to obtain a baking powder.

The natural ground calcium carbonate of step a) and the at least one solid organic acid of step b) may be added to a mixer in mixing step c) simultaneously or in any order. According to one embodiment, the natural ground calcium carbonate of step a) is added to the at least one solid organic acid of step b) to a mixing vessel in mixing step c), or vice versa. According to another embodiment, the natural ground calcium carbonate of step a) and the at least one solid organic acid of step b) are added simultaneously to a mixer in mixing step c).

In case the baking powder contains one or more additives in addition to the natural ground calcium carbonate and the at least one solid organic acid, the process according to the invention comprises the further steps of providing one or more additive and mixing the one or more additive with the natural ground calcium carbonate and the at least one solid organic acid simultaneously or in any possible order. According to one embodiment, the process further comprises a step of providing one or more additives, and the step of mixing the one or more additive with the natural ground calcium carbonate and the at least one solid organic acid simultaneously or in any possible order. According to one embodiment, the one or more additives are solids, which are provided in dry form.

The process according to the present invention may further comprise a step of packaging the baking powder obtained in step c). According to one embodiment, the process further comprises a step of packaging the baking powder obtained in step c).

### The use

Another aspect of the present invention refers to the use of a composition as baking powder, the composition comprising a natural ground calcium carbonate having a volume median particle size d₅₀ from 1 to 15 µm, and at least one solid organic acid having a pKa value in the range of 2.5 to 7.0, wherein the at least one solid organic acid is citric acid, wherein the natural ground calcium carbonate is present in an amount of from 30 to 70 wt.%, based on the total weight of the baking powder, and the at least one solid organic acid is present in an amount of from 30 to 70 wt.%, based on the total weight of the baking powder, wherein the composition is sodium-free and free of magnesium carbonate which means that the baking powder contains less than 1 wt.% of a sodium-containing component and less than 1 wt.% of magnesium carbonate.

According to one embodiment, the baking powder of the present invention is used by mixing the baking powder with other food ingredients, preferably in the presence of water, and subjecting the mixture to a temperature of from 20 to 300°C, preferably from 80 to 250°C. Preferably, the mixture is subjected to a temperature of from 20 to 300°C over a time period of from 1 min to 24 h, preferably from 30 min to 4 h.

The baking powder may be used in specific quantities with respect to other food ingredients. For example, the baking powder may be used in specific quantities with respect to flour as another food ingredient. According to one embodiment, the baking powder is used in an amount of from 10 to 100 g, preferably of from 30 to 70 g, more preferably from 40 to 60 g, and most preferably from 50 to 60 g, per kg of flour.

According to another embodiment of the present invention, a process is provided, comprising the steps of mixing the baking powder according to the present invention with one or more further food ingredients, preferably in the presence of water, and subjecting the mixture to a temperature of from 20 to 300°C, preferably from 80 to 250°C.

### Figures

Figure 1: Calculated slice area of the cakes prepared in baking trials 1 to 5.
Figure 2: Calculated pore diameter of the cakes prepared in baking trials 1 to 5.
Figure 3A: Calculated slice area of the cakes prepared in baking trial 1 and 6.
Figure 3B: Calculated pore diameter of the cakes prepared in baking trial 1 and 6.
Figure 4: Calculated slice area of the cakes prepared in baking trials 7 to 11.
Figure 5: Calculated pore diameter of the cakes prepared in baking trials 7 to 11.
Figure 6: Pictures of selected cakes prepared in baking trials 7 to 11.
Figure 7A: Total gas formation of an inventive baking powder over time in a gas-release test.
Figure 7B: Normalized gas formation of an inventive baking powder in a gas-release test.

### Examples

### 1. Methods

### Particle size distribution

Volume determined median particle size *d*₅₀(vol) and the volume determined top cut particle size *d*₉₈(vol) was evaluated using a Malvern Mastersizer 3000 Laser Diffraction System (Malvern Instruments Plc., Great Britain). The d₅₀(vol) or d₉₈(vol) value indicates a diameter value such that 50 % or 98 % by volume, respectively, of the particles have a diameter of less than this value. The raw data obtained by the measurement was analyzed using the Mie theory, with a particle refractive index of 1.57 and an absorption index of 0.005. The methods and instruments are known to the skilled person and are commonly used to determine particle size distributions of fillers and pigments. The measurement was carried out in an aqueous solution of 0.1 wt.-% Na₄P₂O₇. The samples were dispersed using a high-speed stirrer and supersonicated.

### Slice area and Pore diameter

The slice area and pore diameter of a cake slice was determined by image analysis. The image analysis of a cake slice was recorded and evaluated with a CCELL device (type: CC.400.01, ser. no.: 415011, 110-240 V, 50-60 H, 55-60 W). After the calibration of the device, a cake slice was selected from the middle of each cake and recorded in the CCELL. The following data of collected by the CCELL device were evaluated: Total area of the cake slice in mm², pore density in number of pores/ 100 mm² and pore diameter in mm.

### Baking trials

All ingredients were mixed according to a cake recipe shown in Table 1 to obtain a mass, which was placed into a longish baking dish. The mass was baked at 200°C for 45 min, then the cake was allowed to cool to room temperature.

### 2. Components

### Natural ground calcium carbonate (NGCC)

A natural ground calcium carbonate from turkey having a d₅₀ (vol) in the range of 1.8 to 2.6 µm. The natural ground calcium carbonate is commercially available from Omya.

### Solid organic acid

Citric acid anhydrous was purchased from Aurimex AG, Switzerland and had a purity of 99%.

Lactic acid/ calcium lactate mixture was purchased from Aurimex AG, Switzerland and had a purity of 99%. The mixture contains 58-60% of lactic acid and 36-42% of calcium lactate and 1-3% of silicates.

### 3. Baking powders

### Inventive baking powders (IBP)

IBP1: NGCC (11 g) + citric acid (14 g)
IBP2: NGCC (16.5 g) + citric acid (14 g)
IBP3: NGCC (22 g) + citric acid (14 g)
RBP (Reference baking powder): NGCC (22 g) + Lactic acid/calcium lactate mixture (20 g)

The inventive baking powders IBP1 to IBP3 and RBP were prepared by dry blending the components in a mixer. All components were added to a Turbula mixer Type T10B and mixing was performed at 50 Hz for 15 min. After 15 min of mixing, the baking powders were ready to use.

A commercially available baking powder from Pistor AG was used as a comparative baking powder (CBP). The comparative baking powder consists of sodium bicarbonate (carbon dioxide source), disodium pyrophosphate (acidic component), wheat starch and calcium phosphate (separating agent).

The commercially available baking powder Ener-G Baking Powder from Ener-G Foods, Inc. was used as another comparative baking powder (CBP 2). According to the product information, the Ener-G Baking Powder consists of calcium carbonate, magnesium carbonate, glucono delta-lactone, and citric acid. The particle size d₅₀ of the calcium carbonate and magnesium carbonate used in the Ener-G Baking Powder was unspecified.

### 4. Baking trials

Baking trials were carried out with the inventive baking powders IBP1 to IBP3, the reference backing powder RBP, the comparative baking powder CBP and without a baking powder. In the baking trials, the baking powders were used for preparing a sponge cake according to the following recipe:

**Table 1: Cake recipe**

| **Ingredient** | **Amount [g]** |
|---|---|
| Wheat flour, type 550 | 538 |
| Wheat starch | 272 |
| Baking margarine | 323 |
| Sugar | 717 |
| Egg | 402 |
| Water | 272 |
| Emulsifier (Jilk) | 43 |
| Salt | 6 |
| Total | 2573 |
| Baking powder | [amount of baking powder as indicated in Table 2 and 3] |

Baking trials were performed using the recipe as shown in Table 1 and the amount of the baking powder indicated in Table 2 or 3. Each baking trial was carried out in a series of n different baking trials.

Table 2 refers to baking trials carried out with inventive baking powders IBP1 to IBP4, the comparative baking powder and a trial without a baking powder.

**Table 2: Baking trials 1 to 6**

| **Baking trial series No.** | **Number of trials (*n*)** | **Baking powder** | **Amount [g] of baking powder** |
|---|---|---|---|
| 1 (comp.) | 10 | CBP | 27 |
| 2 | 10 | IBP1 | 25 |
| 3 | 10 | IBP2 | 30.5 |
| 4 | 9 | IBP3 | 36 |
| 5 | 10 | none | - |
| 6 | 10 | RBP | 42 |

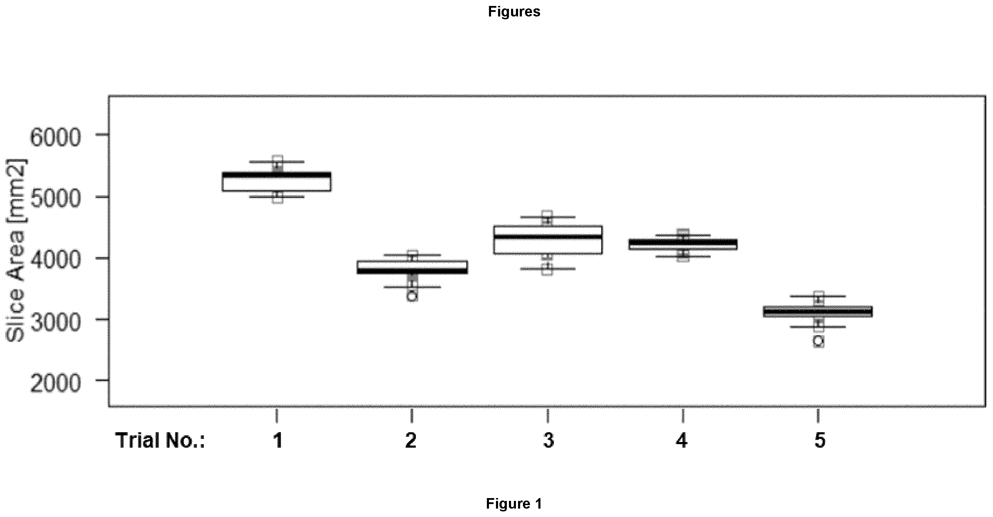

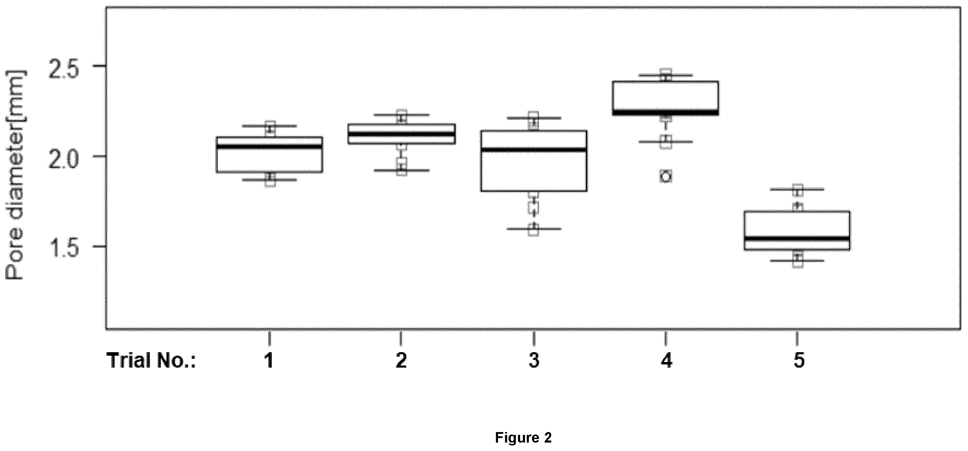

Figure 1 and Figure 2 shows the results of the baking trials 1 to 5.

Figure 1 shows the results for the slice area of the cakes of trials 1 to 5. The slice area of the cake can be used as an indicator for the performance of the baking powder, and especially for the release of carbon dioxide during the preparation of the cake mass and/or the baking process. The higher the slice area is, the more the volume of the cake has increased during the baking process. For example, baking trial 5 resulted in the smallest slice area of the cakes, which means that the cakes did not increase, or only relatively little, in volume during the baking process. This can be explained by the absence of baking powder. Baking trials 2 to 4, which were carried out with the inventive baking powders, show a significantly higher slice area than the baking trial without baking powder. Baking trials 2 to 4 further show comparable results as baking trial 1, which was carried out with the commercially available baking powder. This shows that the inventive baking powders can be used as leavening agents for food preparation. Inventive baking powder 2 (baking trial 3) and inventive baking powder 3 (baking trial 4) performed equally good in the baking trials.

Figure 2 shows the results for the pore diameter of the cakes of trials 1 to 5. The pore diameter is another indicator for the performance of the baking powder. For example, a cake, which has been prepared without or with a poorly performing baking powder usually has pores with a particular small pore diameter. Figure 2, trial 5 refers to cakes, which were prepared without baking powder. The cakes of trial 5 are the cakes with the smallest pore diameter. The cakes of trial 1, which was prepared using the commercially available baking powder, show a pore diameter, which is comparable or smaller than the pore diameter of the cakes, which were prepared by using the inventive baking powder 1 to 3. It can be gathered from the results shown in Figure 2 that the inventive baking powders perform at least as good, or even better, regarding the pore diameter compared to the prior art reference.

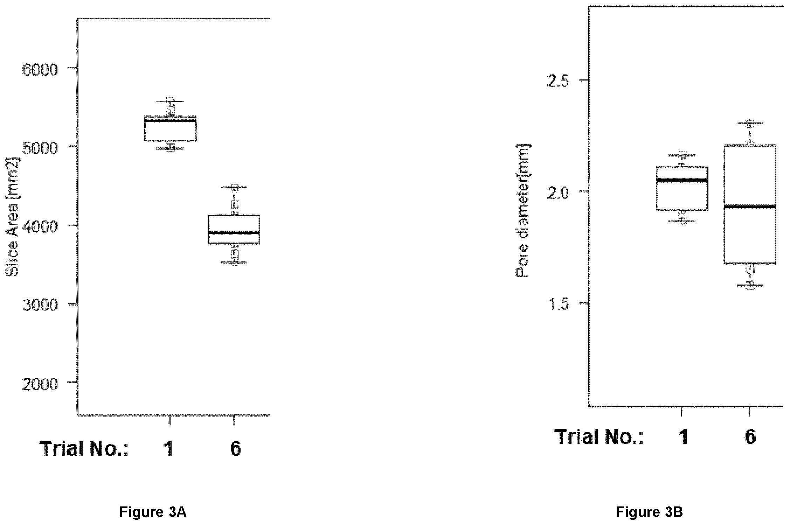

Figure 3A and 3B show the results of baking trial 6 in comparison with the comparative trial 1. The slice area of the cakes according to trial 6 is comparable to the slice area of the cakes of trial 2 and lies significantly above the slice area of the cakes according to trial 5 (no baking powder) shown in Figure 2. The pore diameter of the cakes according to trial 6 is comparable to the pore diameter of the reference cakes. The results show that the reference baking powder can be used as a leavening agent for food preparation.

Table 3 refers to baking trials, which were carried out with different amounts of inventive baking powder IBP2 (trials 8 to 11). For comparison, another series of baking trials was carried out with the commercially available baking powder (trial 7).

**Table 3: Baking trials 7 to 11**

| **Baking trial series No.** | **Number of trials (*n*)** | **Baking powder** | **Amount [g] of baking powder** |
|---|---|---|---|
| 7 (comp.) | 10 | CBP | 27 |
| 8 | 10 | IBP2 | 30.5 |
| 9 | 10 | IBP2 | 38.4 |
| 10 | 10 | IBP2 | 46.1 |
| 11 | 10 | IBP2 | 56,3 |

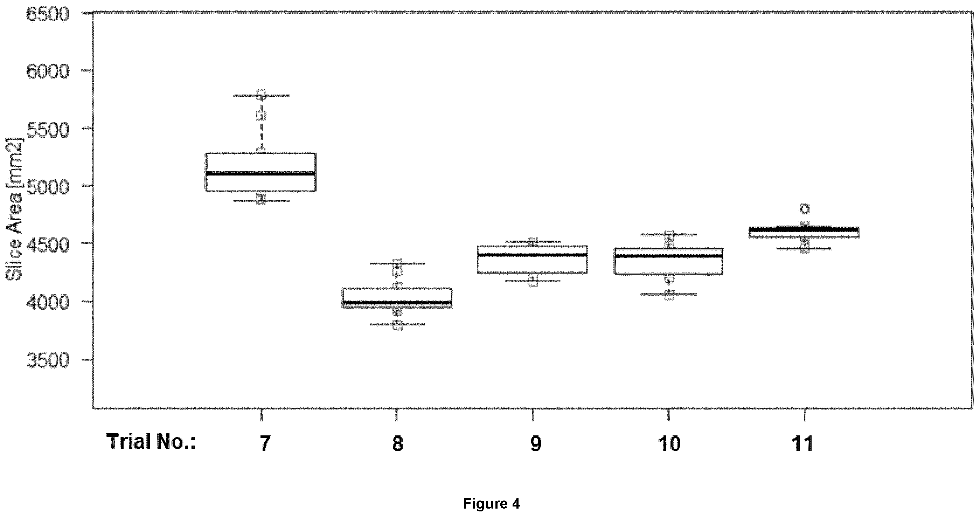

The results of the baking trials according to Table 3 are shown in figure 4 to figure 6.

Figure 4 shows the results for the slice area of the cakes prepared in trials 7 to 11. The results of trials 8 to 11 show a significantly increased slice area of the cakes compared to cakes, which were prepared without baking powder (see figure 2, trial 5). It can further be gathered from the results shown in figure 4 that the increase of the amount of inventive baking powder 2 (trials 8 to 11) leads to a further increase in slice area of the prepared cakes. Trials 9 to 11 resulted in slice areas, which are the closest to the reference of trial 7. For example, the cakes of trial 11 had a slice area, which is only approximately 6 cm³ per cakes smaller than that of the reference.

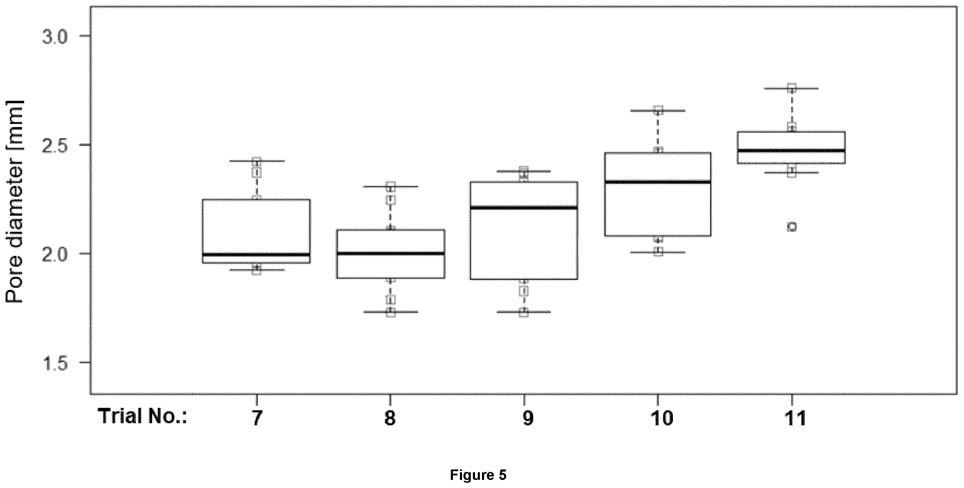

Figure 5 shows the results for the pore diameter of the cakes prepared in trials 7 to 11. The pore diameter of the cakes of trials 8 to 11 are comparable or higher than the pore diameter of the reference cakes prepared in trial 7.

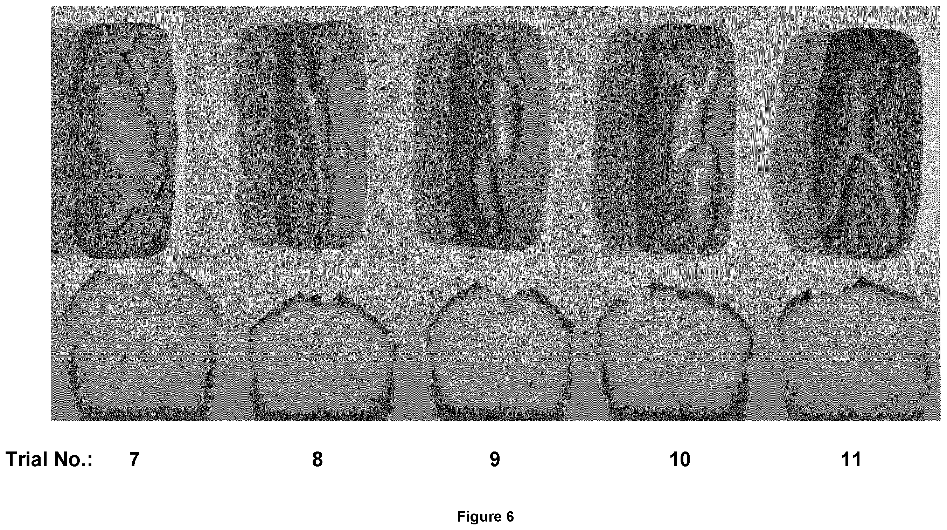

Figure 6 shows pictures of selected cakes from trials 7 to 11. The pictures from above the cake show that the selected cakes have a satisfactory crumb brightness and cake crack. The appearance of the slice area of the selected cakes is also satisfactory.

As can be gathered from the data presented in Figures 1 to 6, the inventive baking powder performs at least comparable to a commercially available baking powder. In certain aspects such as pore diameter of a baked cake, the inventive baking powder performs better than a comparative baking powder.

### 5. Gas-release tests

It is desirable that a baking powder produces a large volume of gas (carbon dioxide) in a comparatively short time to provide the prepared food with a desired volume and texture. A baking powder which has such desired properties can be used in comparatively low quantities, which avoids costs and/or an influence on the taste of the prepared food. Thus, the gas release profile of a baking powder is an indicator for its efficiency and/or effectiveness. The more gas (carbon dioxide) is released by a baking powder, the better it is.

Gas-release tests were carried out with IBP2 and CBP2.

The gas-release trials were carried out as follows:
1) 0.7 g of baking powder (IBP2 or CBP2) were charged in a three-neck-round bottom flask;
2) A magnetic stir bar was added, and one neck was closed (gas proof);
3) The second neck of the flask was connected to a volumetric measurement burette;
4) The flask was heated to 50°C with a water bath and a heating plate. The magnetic stirrer was started at 250 rpm;
6) 25 ml of demineralized water were added to the baking powder via a burette through the third neck of the flask and the volumetric measurement was started;
7) The produced gas volume was measured after 0.5, 1, 1.5, 2, 2.5, 3, 3.5, 4, 5, 6, 7, 8, 9, 10, 15, 20, 30 and 45 minutes.

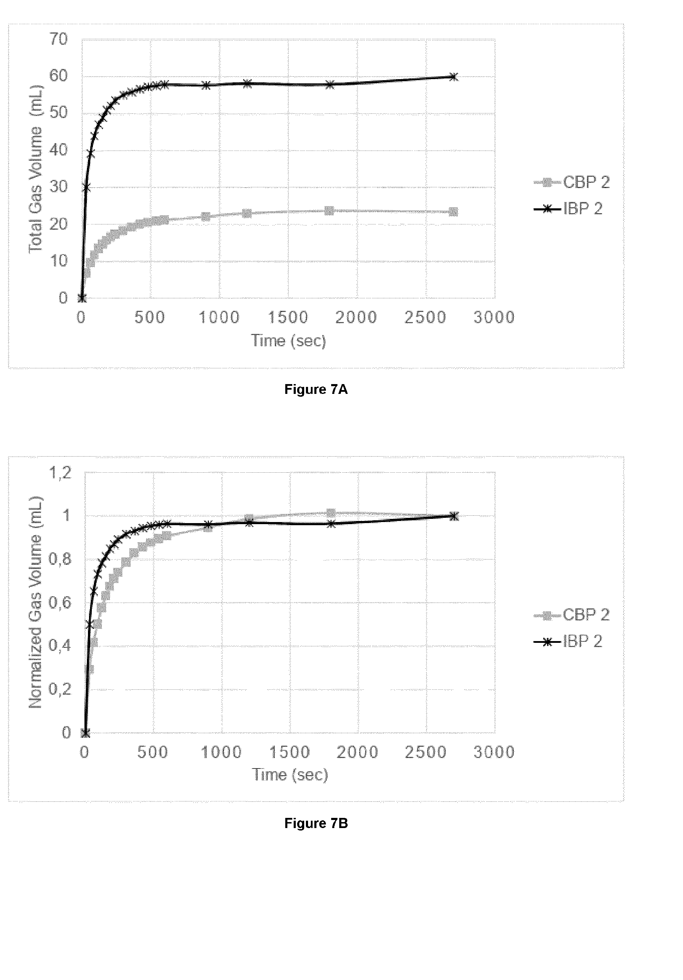

The results of the gas-release trials are shown in Figures 7A and 7B. Figure 7A shows the total amount of gas released over time by IBP 2 or CBP 2, respectively. As can be seen in Figure 7A, the inventive baking powder IBP 2 releases a significantly higher amount of gas over time than the comparative baking powder CBP 2. Thus, the inventive baking powder IBP 2 is more effective than the comparative baking powder CBP 2. Figure 7B shows the normalized gas formation of the two baking powders. The normalized gas formation indicates the time needed for forming the total gas volume released by the respective baking powder. Thus, the normalized gas formation indicates the reaction kinetics of the baking powders. As can be gathered from Figure 7B, the inventive baking powder IBP 2 releases gas slightly faster than the comparative baking powder CBP 2. Overall, the inventive baking powder IBP 2 releases gas in a higher amount and faster than the comparative baking powder CBP 2.

## Claims

1. A baking powder comprising
a natural ground calcium carbonate having a volume median particle size d₅₀ from 1 to 15 µm, and
at least one solid organic acid having a pKa value in the range of 2.5 to 7.0, wherein the at least one solid organic acid is citric acid,
wherein the natural ground calcium carbonate is present in an amount of from 30 to 70 wt.%, based on the total weight of the baking powder, and the at least one solid organic acid is present in an amount of from 30 to 70 wt.%, based on the total weight of the baking powder,
wherein the baking powder is sodium-free and free of magnesium carbonate which means that the baking powder contains less than 1 wt.% of a sodium-containing component and less than 1 wt.% of magnesium carbonate.

2. The baking powder according to claim 1, wherein the natural ground calcium carbonate is selected from the group consisting of marble, chalk, limestone, and mixtures thereof.

3. The baking powder according to any one of the preceding claims, wherein the natural ground calcium carbonate has a volume median particle size d₅₀ from 1.5 to 10 µm, preferably from 1.5 to 8 µm, and most preferably from 2 to 6 µm, and/or
wherein the natural ground calcium carbonate has a volume top cut particle size d₉₈ from 2 to 30 µm, preferably from 3 to 20 µm, more preferably from 3 to 15 µm, and most preferably from 4 to 12 µm.

4. The baking powder according to any one of the preceding claims, wherein the baking powder contains less than 10 wt.%, preferably less than 5 wt.%, more preferably less than 1 wt.% of a phosphate salt, and most preferably is phosphate-free.

5. The baking powder according to any one of the preceding claims, wherein the natural ground calcium carbonate is present in an amount of from 40 to 60 wt.%, based on the total weight of the baking powder, and/or wherein the at least one solid organic acid is present in an amount of from 40 to 60 wt.%, based on the total weight of the baking powder.

6. The baking powder according to any one of the preceding claims, wherein the molar ratio of the natural ground calcium carbonate to the carboxylic acid group(s) of the at least one solid organic acid ranges between 0.25:1 to 1.5:1, preferably from 0.4:1 to 1.2:1, more preferably from 0.6:1 to 1:1, and most preferably from 0.7:1 to 0.9:1.

7. The baking powder according to any one of the preceding claims, wherein the baking powder contains less than 10 wt.%, preferably less than 5 wt.%, more preferably less than 1 wt.%, of a separating agent, based on the total weight of the baking powder, and most preferably is essentially free of a separating agent.

8. The baking powder according to any one of the preceding claims, wherein the at least one solid organic acid is a mixture of at least one organic acid and a salt thereof,
and more preferably having a weight ratio of the at least one organic acid to the salt thereof in the range between 0.25:1 to 3:1, preferably between 0.75:1 to 2.5:1, and more preferably between 1:1 to 2:1.

9. The baking powder according to any one of the preceding claims, wherein the baking powder consists of the natural ground calcium carbonate and citric acid.

10. A product comprising the baking powder according to any one of the preceding claims, wherein the product is preferably a baking mixture, more preferably a baking mixture for a pastry, a bread, a cake, a waffle, a pizza or a noodle.

11. A process for producing a baking powder according to any one of claims 1 to 10, comprising the steps of
(a) providing a natural ground calcium carbonate having a volume median particle size *d*₅₀ from 1 to 15 µm in dry form,
(b) providing a solid organic acid having a pKa value in the range of 2.5 to 7.0, 2 wherein the at least one solid organic acid is citric acid
(c) mixing the natural ground calcium carbonate of step (a) with the solid organic acid of step (b) in a dry blending step to obtain a baking powder.

12. Use of a composition as a baking powder, wherein the composition comprises a natural ground calcium carbonate having a volume median particle size *d*₅₀ from 1 to 15 µm, and
a solid organic acid having a pKa value in the range of 2.5 to 7.0, wherein the at least one solid organic acid is citric acid,
wherein the natural ground calcium carbonate is present in an amount of from 30 to 70 wt.%, based on the total weight of the baking powder, and the at least one solid organic acid is present in an amount of from 30 to 70 wt.%, based on the total weight of the baking powder,
wherein the baking powder is sodium-free and free of magnesium carbonate which means that the baking powder contains less than 1 wt.% of a sodium-containing component and less than 1 wt.% of magnesium carbonate.

## Patentansprüche

1. Ein Backpulver, umfassend
ein natürliches, gemahlenes Calciumcarbonat mit einer volumenmittleren Partikelgröße *d*₅₀ von 1 bis 15 µm, und
mindestens eine feste organische Säure mit einem pKa-Wert im Bereich von 2,5 bis 7,0, wobei die mindestens eine feste organische Säure Zitronensäure ist,
wobei das natürliche, gemahlene Calciumcarbonat in einer Menge von 30 bis 70 Gew.-%, bezogen auf das Gesamtgewicht des Backpulvers, und die mindestens eine feste organische Säure in einer Menge von 30 bis 70 Gew.-%, bezogen auf das Gesamtgewicht des Backpulvers, vorliegt,
wobei das Backpulver natriumfrei und frei von Magnesiumcarbonat ist, was bedeutet, dass das Backpulver weniger als 1 Gew.-% einer natriumhaltigen Komponente und weniger als 1 Gew.-% Magnesiumcarbonat enthält.

2. Das Backpulver nach Anspruch 1, wobei das natürliche, gemahlene Calciumcarbonat aus der Gruppe ausgewählt ist, die aus Marmor, Kreide, Kalkstein und Mischungen davon besteht.

3. Das Backpulver nach einem der vorhergehenden Ansprüche, wobei das natürliche, gemahlene Calciumcarbonat eine volumenmittlere Partikelgröße d₅₀ von 1,5 bis 10 µm, vorzugsweise von 1,5 bis 8 µm und am meisten bevorzugt von 2 bis 6 µm, aufweist, und/oder
wobei das natürliche, gemahlene Calciumcarbonat eine volumenobere Partikelgröße d₉₈ von 2 bis 30 µm, vorzugsweise von 3 bis 20 µm, noch bevorzugter von 3 bis 15 µm und am meisten bevorzugt von 4 bis 12 µm aufweist.

4. Das Backpulver nach einem der vorhergehenden Ansprüche, wobei das Backpulver weniger als 10 Gew.-%, vorzugsweise weniger als 5 Gew.-%, besonders bevorzugt weniger als 1 Gew.-% eines Phosphatsalzes enthält und besonders bevorzugt phosphatfrei ist.

5. Das Backpulver nach einem der vorhergehenden Ansprüche, wobei das natürliche, gemahlene Calciumcarbonat in einer Menge von 40 bis 60 Gew.-%, bezogen auf das Gesamtgewicht des Backpulvers, vorliegt und/oder wobei die mindestens eine feste organische Säure in einer Menge von 40 bis 60 Gew.-%, bezogen auf das Gesamtgewicht des Backpulvers, vorliegt.

6. Das Backpulver nach einem der vorhergehenden Ansprüche, wobei das molare Verhältnis des natürlichen, gemahlenen Calciumcarbonats zu der/den Carbonsäuregruppe(n) der mindestens einen festen organischen Säure im Bereich von 0,25:1 bis 1,5:1, vorzugsweise von 0,4:1 bis 1,2:1, noch bevorzugter von 0,6:1 bis 1:1 und am meisten bevorzugt von 0,7:1 bis 0,9:1 liegt.

7. Das Backpulver nach einem der vorhergehenden Ansprüche, wobei das Backpulver weniger als 10 Gew.-%, vorzugsweise weniger als 5 Gew.-%, besonders bevorzugt weniger als 1 Gew.-%, eines Trennmittels, bezogen auf das Gesamtgewicht des Backpulvers, enthält und besonders bevorzugt im Wesentlichen frei von einem Trennmittel ist.

8. Das Backpulver nach einem der vorhergehenden Ansprüche, wobei die mindestens eine feste organische Säure eine Mischung aus mindestens einer organischen Säure und einem Salz davon ist,
und vorzugsweise mit einem Gewichtsverhältnis der mindestens einen organischen Säure zu ihrem Salz im Bereich zwischen 0,25:1 und 3:1, vorzugsweise zwischen 0,75:1 und 2,5:1, und noch bevorzugter zwischen 1:1 und 2:1.

9. Das Backpulver nach einem der vorhergehenden Ansprüche, wobei das Backpulver aus natürlichem, gemahlenem Calciumcarbonat und Zitronensäure besteht.

10. Ein Produkt, umfassend das Backpulver nach einem der vorhergehenden Ansprüche, wobei das Produkt vorzugsweise eine Backmischung, besonders bevorzugt eine Backmischung für ein Gebäck, ein Brot, einen Kuchen, eine Waffel, eine Pizza oder eine Nudel ist.

11. Ein Verfahren zur Herstellung eines Backpulvers nach einem der Ansprüche 1 bis 10, umfassend die Schritte
(a) Bereitstellen eines natürlichen, gemahlenen Calciumcarbonats mit einer volumenmittleren Partikelgröße d₅₀ von 1 bis 15 µm in trockener Form,
(b) Bereitstellen einer festen organischen Säure mit einem pKa-Wert im Bereich von 2,5 bis 7,0, wobei die mindestens eine feste organische Säure Zitronensäure ist,
(c) Mischen des natürlichen, gemahlenen Calciumcarbonats aus Schritt (a) mit der festen organischen Säure aus Schritt (b) in einem Trockenmischschritt, um ein Backpulver zu erhalten.

12. Verwendung einer Zusammensetzung als Backpulver, wobei die Zusammensetzung umfasst
ein natürliches, gemahlenes Calciumcarbonat mit einer volumenmittleren Partikelgröße d₅₀ von 1 bis 15 µm, und
eine feste organische Säure mit einem pKa-Wert im Bereich von 2,5 bis 7,0, wobei die mindestens eine feste organische Säure Zitronensäure ist,
wobei das natürliche, gemahlene Calciumcarbonat in einer Menge von 30 bis 70 Gew.-%, bezogen auf das Gesamtgewicht des Backpulvers, und die mindestens eine feste organische Säure in einer Menge von 30 bis 70 Gew.-%, bezogen auf das Gesamtgewicht des Backpulvers, vorliegt,
wobei das Backpulver natriumfrei und frei von Magnesiumcarbonat ist, was bedeutet, dass das Backpulver weniger als 1 Gew.-% einer natriumhaltigen Komponente und weniger als 1 Gew.-% Magnesiumcarbonat enthält.

## Revendications

1. Levure chimique comprenant
un carbonate de calcium naturel broyé ayant une granulométrie moyenne en volume d₅₀ de 1 à 15 µm,
au moins un acide organique solide ayant une valeur de pKa comprise dans la plage de 2,5 à 7,0, dans laquelle l'au moins un acide organique solide est l'acide citrique,
dans laquelle le carbonate de calcium naturel broyé est présent en une quantité allant de 30 à 70 % en poids, en se basant sur le poids total de la levure chimique, et l'au moins un acide organique solide est présent en une quantité allant de 30 à 70 % en poids, en se basant sur le poids total de la levure chimique,
dans laquelle la levure chimique est exempte de sodium et exempte de carbonate de magnésium, ce qui signifie que la levure chimique contient moins de 1 % en poids d'un composant contenant du sodium et moins de 1 % en poids de carbonate de magnésium.

2. Levure chimique selon la revendication 1, dans laquelle le carbonate de calcium naturel broyé est choisi dans le groupe constitué par le marbre, la craie, le calcaire et des mélanges de ceux-ci.

3. Levure chimique selon l'une quelconque des revendications précédentes, dans laquelle le carbonate de calcium naturel broyé a une granulométrie médiane en volume *d₅₀* de 1,5 à 10 µm, de préférence de 1,5 à 8 µm, et de manière préférée entre toutes de 2 à 6 µm, et/ou
dans laquelle le carbonate de calcium naturel broyé a une granulométrie de coupe supérieure en volume *d₉₈* de 2 à 30 µm, de préférence de 3 à 20 µm, plus préférablement de 3 à 15 µm, et de manière préférée entre toutes de 4 à 12 µm.

4. Levure chimique selon l'une quelconque des revendications précédentes, dans laquelle la levure chimique contient moins de 10 % en poids, de préférence moins de 5 %, plus préférablement moins de 1 % en poids d'un sel de phosphate, de manière préférée entre toutes est exempte de phosphate.

5. Levure chimique selon l'une quelconque des revendications précédentes, dans laquelle le carbonate de calcium naturel broyé est présent en une quantité de 40 à 60 % en poids, en se basant sur le poids total de la levure chimique, et/ou dans laquelle l'au moins un acide organique solide est présent en une quantité allant de 40 à 60 % en poids, en se basant sur le poids total de la levure chimique.

6. Levure chimique selon l'une quelconque des revendications précédentes, dans laquelle le rapport molaire du carbonate de calcium naturel broyé au(x) groupe(s) acide(s) carboxylique(s) de l'au moins un acide organique solide est compris dans la plage allant de 0,25:1 à 1,5:1, de préférence de 0,4:1 à 1,2:1, plus préférablement de 0,6:1 à 1:1, et de manière préférée entre toutes de 0,7:1 à 0,9:1.

7. Levure chimique selon l'une quelconque des revendications précédentes, dans laquelle la levure chimique contient moins de 10 % en poids, de préférence moins de 5 % en poids, plus préférablement moins de 1 % en poids, d'un agent de séparation, en se basant sur le poids total de la levure chimique, et de manière préférée entre toutes est essentiellement exempte d'agent de séparation.

8. Levure chimique selon l'une quelconque des revendications précédentes, dans laquelle l'au moins un acide organique solide est un mélange d'au moins un acide organique et d'un sel de celui-ci,
et plus préférablement ayant un rapport pondéral de l'au moins un acide organique au sel de celui-ci dans la plage allant de 0,25:1 à 3:1, de préférence de 0,75:1 à 2,5:1, et plus préférablement de 1:1 à 2:1.

9. Levure chimique selon l'une quelconque des revendications précédentes, dans laquelle la levure chimique est constituée du carbonate de calcium naturel broyé et d'acide citrique.

10. Produit comprenant la levure chimique selon l'une quelconque des revendications précédentes, dans lequel le produit est de préférence un mélange de levures chimiques, plus préférablement un mélange de levures chimiques pour une pâtisserie, un pain, un gâteau, une gaufre, une pizza ou une nouille.

11. Procédé de production d'une levure chimique selon l'une quelconque des revendications 1 à 10, comprenant les étapes consistant à
(a) fournir un carbonate de calcium naturel broyé ayant une granulométrie moyenne en volume *d*₅₀ de 1 à 15 µm sous forme sèche ;
(b) fournir un acide organique solide ayant une valeur de pKa comprise dans la plage de 2,5 à 7,0, dans laquelle l'au moins un acide organique solide est l'acide citrique ;
(c) mélanger le carbonate de calcium naturel broyé de l'étape (a) avec l'acide organique solide de l'étape (b) dans une étape de mélange à sec pour obtenir une levure chimique.

12. Utilisation d'une composition en tant que levure chimique, dans laquelle la composition comprend
un carbonate de calcium naturel broyé ayant une granulométrie moyenne en volume *d*₅₀ de 1 à 15 µm,
un acide organique solide ayant une valeur de pKa comprise dans la plage de 2,5 à 7,0, dans laquelle l'au moins un acide organique solide est l'acide citrique,
dans laquelle le carbonate de calcium naturel broyé est présent en une quantité de 30 à 70 % en poids, en se basant sur le poids total de la levure chimique, et l'au moins un acide organique solide est présent en une quantité de 30 à 70 % en poids, en se basant sur le poids total de la levure chimique,
dans laquelle la levure chimique est exempte de sodium et exempte de carbonate de magnésium, ce qui signifie que la levure chimique contient moins de 1 % en poids d'un composant contenant du sodium et moins de 1 % en poids de carbonate de magnésium.
